Europäisches Patentamt

European Patent Office

Office européen des brevets

(19)

(11) Publication number: **0 142 715**
**B1**

(12)

# EUROPEAN PATENT SPECIFICATION

(45) Date of publication of patent specification: **22.03.89**

(21) Application number: **84112530.5**

(22) Date of filing: **17.10.84**

(60) **Divisional applications 85115872, 85115873 filed on 12.12.85.**

(51) Int. Cl.⁴: **F 24 D 1/00, B 05 B 7/06, F 23 M 5/00, C 04 B 28/34 // (C04B28/34, 14:38)**

(54) Insulation system.

(30) Priority: **17.10.83 US 542272**
**12.10.84 US 660190**
**12.10.84 US 660206**
**12.10.84 US 660207**

(43) Date of publication of application:
**29.05.85 Bulletin 85/22**

(45) Publication of the grant of the patent:
**22.03.89 Bulletin 89/12**

(84) Designated Contracting States:
**AT BE CH DE FR GB IT LI LU NL SE**

(56) References cited:
**DE-A-1 458 912**
**FR-A-1 211 519**
**GB-A-2 093 014**
**US-A-2 433 463**
**US-A-2 929 436**
**US-A-3 674 599**
**CHEMICAL ABSTRACTS, vol. 89, no. 16, 1978, abstract 134484G, page 311 Columbus, Ohio, US**

(73) Proprietor: **MANVILLE CORPORATION**
**Ken-Caryl Ranch**
**Denver Colorado 80217 (US)**

(72) Inventor: **Smith, William Hahn**
**163 Orchard Drive**
**McMurray Pennsylvania 15317 (US)**

(74) Representative: **Grättinger, Günter**
**Wittelsbacherstrasse 5 Postfach 16 49**
**D-8130 Starnberg (DE)**

(56) References cited:
**CHEMICAL ABSTRACTS, vol. 84, no. 12, 1976, abstract 76925J, page 331, Columbus, Ohio, US**
**CHEMICAL ABSTRACTS, vol. 82, no. 26, 1975, abstract 172760G, page 102 Columbus, Ohio, US**
**CHEMICAL ABSTRACTS, vol. 98, no. 4, 1983, abstract 21424E, page 283 Columbus, Ohio, US**

## Description

The invention relates to a method and a spray gun for applying a layer of fibers coated with a tacky inorganic binder onto a surface, in accordance with the preamble of Claims 1 and 8 respectively. More particularly, the invention relates to a method and an apparatus for spraying a layer of fibers coated with inorganic binder by spraying the binder onto the outside and into the inner of a fiber stream directed toward a surface.

In the past, high temperature resistant fibrous material has been applied to heated surfaces, such as heat treating furnaces and kilns, by attaching batts or strips containing such fibers to the heated surface. This method requires mechanical anchoring or fastening means to attach the strips to the heated surface. Such mechanical attachment is expensive in that it requires large amounts of labor and fastening materials to attach the strips. In addition, because this method is time consuming, it requires the furnace or kiln to be out of service for extended periods of time. Finally, gaps between adjoining strips may occur either during the attachment process or later due to the thermal shrinkage which allows heat leakage between the layers of fiber.

Improvements to this method of attaching refractory fiber linings to the wall of kilns and furnaces have been made such as is described in US-A-4,381,634. This method involving the mechanical attachment of modules, overcomes many of the problems associated with layered linings especially the opening of gaps between the edges of layers due to heat shrinkage at elevated temperatures. However, like the above method, the use of modules requires mechanical attachment to the metal shells of furnaces which again require considerable cost in labor. The use of modules has also been found to be of value in relining old dense refractory linings such as refractory brick. In this case the folded or pleated modules are glued to the old monolithic or brick lining by use of a refractory mortar or glue which is generally of the hydraulic setting nature. This method of relining of kilns is labor intensive requiring the application of mortar to the brick work and then quickly applying the folded modules thereon. This method requires that time be given for the setting of the hydraulic mortar before the newly lined kiln can be fired.

All the above methods have one feature in common which is that they present an unbonded refractory fiber lining to the interior of the kiln. As time goes by these fibers devitrify (crystallize) and in so doing lose some of their mechanical strength making them more susceptible to mechanical abrasion and destruction due to high velocity gases from the heating mechanisms of the kilns. High temperature resistant binder powders have been mixed with water and sprayed with refractory fibers. Such methods typically employ calcium alumina cements which are very alkaline and will settle when in suspension. It is also difficult to achieve homogenous mixing of fiber and binder with such a system. A hydraulic bond must be achieved prior to drying of the cement otherwise bonding of the fibers will not occur. In addition, careful drying of the sprayed mixture must be undertaken in order to prevent violent spalling.

A method for forming heat-resistant walls in industrial furnaces or melters is described in DE-A-14 58 912. A liquid binder is added to the refractory material after latter has left its container. This method is particularly advantageous if orthophosphoric acid or aluminum phosphate is employed as the liquid binder in combination with a magnesite-containing material.

Other methods for spraying insulation have been employed in the past utilizing organic binders. For example, US-A-2,929,436 discloses a method and apparatus for spraying a mixture of fibers and resin material. As indicative of prior methods of application, this publication discloses mixing fiber and resin in a nozzle and spraying the mixture onto a surface. However, while suited for its intended purpose, such method and apparatus, if used in the spraying of refractory fiber with a tacky inorganic binder, would cause clogging of the nozzle. In addition, incomplete coating of the refractory fibers could cause a weakened layer of fibers which in turn could cause failure of the insulating layer at high temperatures. Because of the temperatures to which refractory fibers are subjected, often 1093.3°C (2000°F) or more, such failures could be dangerous to workers in such industries as the steel industry and could cause extensive damage to furnaces and kilns. Thus, the intimate admixture of refractory fiber and the tacky inorganic binder to form a monolithic layer is important to the safe and efficient operation of such furnaces and kilns.

US-A-2 433 463 relates to a spray gun and method for spraying a granular or fibrous material with an adhesive. Particles of material are projected from a nozzle equipped with a multiple-jet spray gun head, the jets being circumferentially arranged in alternately pitched relationship around the end of the nozzle. This allows simultaneously projecting a plurality of converging sprays of adhesive against the material in a manner such that the adhesive sprays are differently pitched relative to the path of the material and converge therewith at different points.

The method for applying a layer of fibers to a surface in accordance with the invention comprises the steps of directing a stream of the fibers toward the surface; coating the directed fibers with a tacky inorganic binder which is sprayed onto the outside and into the inner of the fiber stream as the fibers are directed from a spray gun such that the fibers adhere to one another and to the surface, and curing the coated fibers.

The method of the invention is accordingly characterised by applying a layer of fibers to a surface while simultaneously coating the fiber with a tacky inorganic binder by spraying the latter onto and into the fiber stream. The layer of binder coated fiber is cured such that the layer becomes monolithic. The fibers are coated with the binder as they are directed from the spray gun and the coated fibers are caused to stick to each other and to the surface toward which they have been directed. Once the fibers have been bonded to the surface, they may be compressed by means such as tamping in order to alter the density of the layer. The layer is cured such that all of the moisture is driven out of the layer. Preferably, the layer is subjected to a temperature of at least 176.67°C (350°F) for a few hours in order to cure the binder and fiber. However, the layer can be immediately exposed to temperatures as high as 537.78°C (1000°F) without damage.

Advantageously the fibers include refractory fibers, which allows raising the operating temperature.

Furthermore, the binder is preferably sprayed onto the surface prior to the step of directing the fibers. Another preferred example of the method of the invention includes the step of, prior to curing the coated fibers: directing a stream of particulate material such as a metal oxide toward the coated fibers; and coating the particulate material with the binder during the step of directing such that the coated particulate material adheres to one another and to the coated fibers.

The method of the invention preferably comprises further:

diluting the inorganic binder prior to the step of directing and/or compressing the binder coated fiber layer to a desired density prior to the step of curing, which may include exposing a face of the binder layer opposite to the surface to a temperature of at least 176.67°C (350°F).

The binder preferably includes a suspension of colloidal particles, the oxide of which will not act as a fluxing agent to alumina silica fibers at temperature above 815.5°C (1500°F) or a phosphate compound and montmorillonite clay.

The binder preferably includes a tackifying agent in combination with a phosphate binder matrix such as aluminium phosphate. The preferred tackifying agents are temperature-resistant clays such as montmorillonite clays. The most preferred clay is Western bentonite clay. A fluxing agent may also be added to the binder in small quantities to increase the strength of the binder to fiber bonds at elevated temperatures. Chromium oxide may also be added to the binder to improve the stability of the binder to fiber bonds at elevated temperatures. In addition, chromium oxide adds colour to the binder which may be advantageous in the coating process.

In addition to phosphate compounds, colloidal suspensions such as colloidal silica, colloidal alumina, colloidal zirconia may be combined with the tackifying agents disclosed herein to produce a suitable binder. When the disclosed tackifying agents are combined with these colloidal suspensions the severe binder migration problems associated with colloidal binders such as colloidal silica are overcome. The addition of the tackifying agent imparts good suspension characteristics to the binder.

A spray gun for directing a stream of moving material resp. a layer of fibers to a surface in accordance with the method of the invention includes a feed line for confining the stream of moving material in a predetermined configuration and at least one outside spray nozzle located on the spray gun for directing a stream of binder onto the outside of the stream of moving material with at least one inside spray nozzle being located within the moving stream. Preferably a deflector is located within the feed line for configuring the moving stream of material in an annular path. Preferably also at least one nozzle is located on the spray gun inside of the annular path.

In the following the invention will be described in detail with reference to the drawings which illustrate examples.

Fig. 1 is an illustration of the binder coated fiber being applied to a furnace;

Fig. 2 is an enlarged perspective view of an novel spray gun for carrying out the method of the present invention;

Fig. 3 is a vertical cross-sectional view taken along line 3-3 of Fig. 2;

Fig. 4 is an elevational view of the novel spray gun;

Fig. 5 is a front perspective view of an alternate embodiment of the spray gun providing a circular fiber path; and

Fig. 6 is a side sectional view of a preferred spray gun for carrying out the method of the invention.

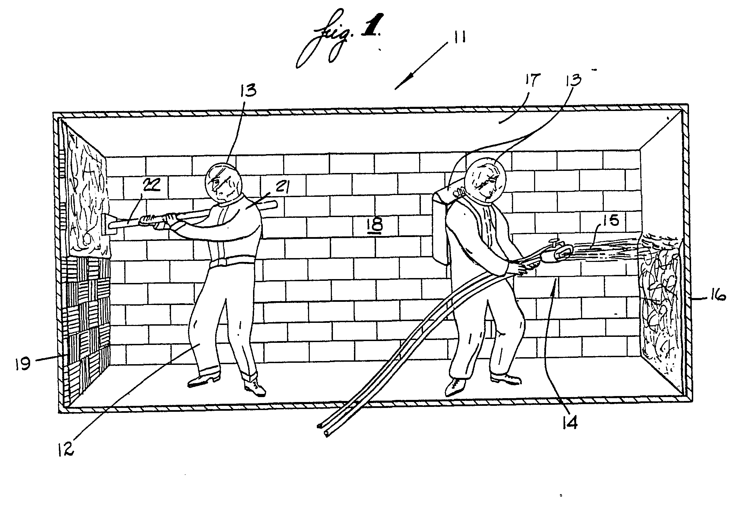

Referring to Fig. 1, an operator, dressed in suitable protective clothing 12 including an enclosed breathing apparatus 13, is shown holding a spraying apparatus generally designated as 14 from which a stream 15 of binder coated refractory fiber is being directed onto furnace wall 16. As used herein, refractory fibers are defined as inorganic, amorphous, or crystalline fibers which are not adversely affected by temperatures in excess of 815.5°C (1500°F). Examples of such fibers are alumina-silica-zirconia fibers, alumina silica fibers and other refractory fibers as are known in the art. Preferably the fiber is blown by air pressure from a suitable compressing apparatus (not shown). Furnace wall 16 is a bare metal wall of furnace 11. Similarly, ceiling 17 is a bare metal wall of furnace 11 onto which stream 15 may be directed. A previously fired or new refractory brick wall 18 of furnace 11 may also be coated with the layer of binder coated fiber. Similarly, a wall 19 which has been previously covered with refractory fiber modules as is known to one skilled in the art may also be coated utilizing the method of the present invention. A second operator, generally designated 21, also in protective clothing and breathing apparatus, is shown with a compressing apparatus 22 which may be used for tamping the layer of binder coated fiber so as to alter the density of the layer deposited by the method of the present invention.

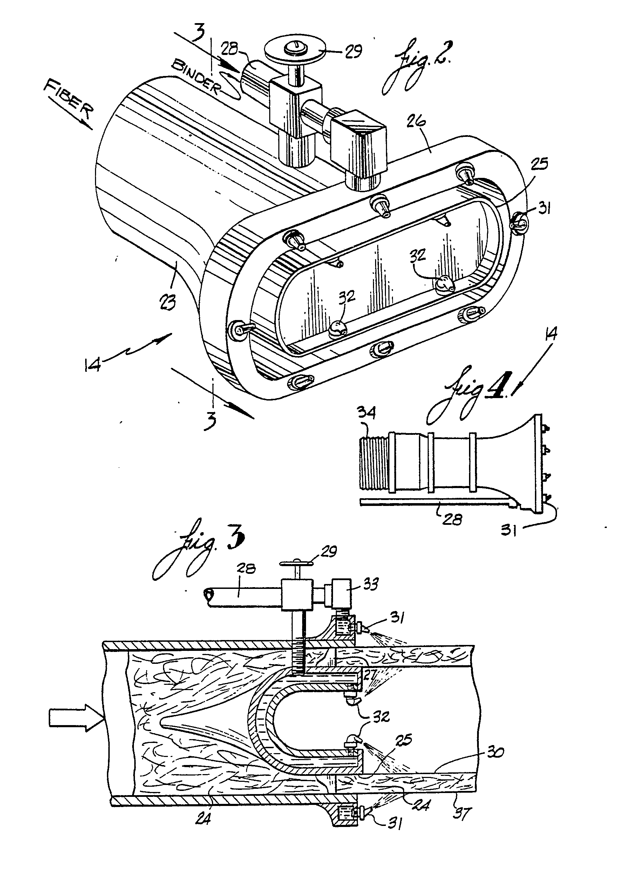

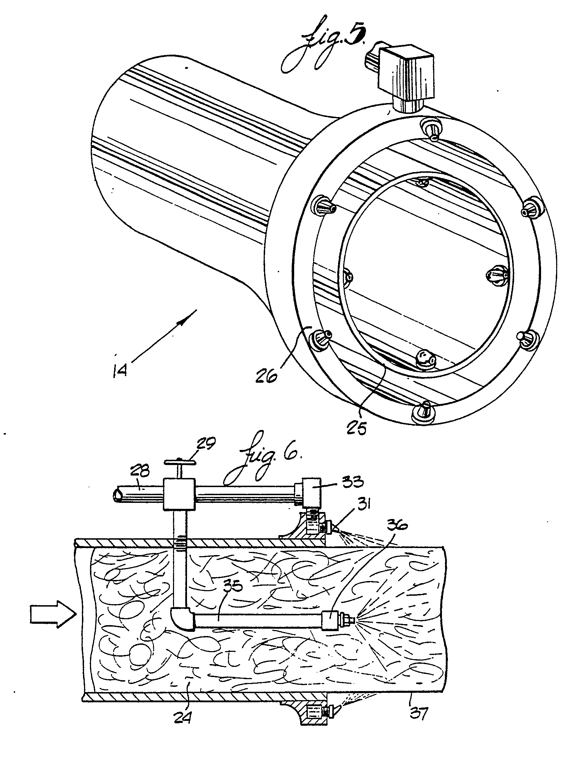

Referring to Fig. 2, a spray gun 14 is shown in more detail. More specifically, the refractory fiber stream 24 is directed through conduit 23 so as to emerge from an annular path defined by a deflector body 25 and a manifold 26. Deflector body 25 is preferably cone shaped and is supported in a manifold 26 by one or more vanes 27 as illustrated in Fig. 3. Deflector body 25 deflects the flow of bulk fibers so as to assume an annular path in an oval or circular configuration depending upon the shape of deflector 25 and manifold 26. Thus a thin ribbon flow of fibers exits in an annular path to be coated on both sides as explained below.

The binder solution is fed through a binder feed line 28 and binder valve 29 into an external nozzle manifold 26 which feeds a plurality of spaced nozzles 31 surrounding the outside 37 of the annular fiber stream 24. Nozzles 31 are directed inwardly so as to spray the liquid binder solution onto the outer fibers 37 as they emanate from spray gun 14. Likewise, a ring of internal nozzles 32 are provided on deflector 25 so as to spray binder into the inner surface 30 of fiber stream 24. Binder is fed under pressure to nozzles 31 through binder feed line 28, valve 29 and manifold 26. Binder is fed under pressure to nozzles 32 through line 28, valve 29 and deflector 25. The fibers are uniformly wetted by the binder from two sides as they are being blown from the gun 14. Thus, the fibers are uniformly coated with liquid binder solution before reaching the surface to be coated.

Referring to Fig. 4, a side elevational view of spray gun 14 is shown as connected to flexible tubing 34. Flexible tubing 34 allows the fiber to be fed therethrough to conduit 23 in the spray gun 14 from a remote location thereby allowing the operator freedom to move about the area to be sprayed. Similarily, binder is fed to gun 14 through flexible line 28.

Referring to Fig. 5, a perspective view of an alternate embodiment of the spray gun is shown in which the deflector 25 and manifold 26 are circular such that annular path 24 of fibers being blown from the spray gun 14 is circular.

Referring to Fig. 6, a side sectional view of a preferred embodiment of a novel spray gun is shown. In this spray gun, no deflector is used to alter the path of fiber stream 24. Rather a nozzle 36 connected to, and supported by, a feed line 35 located in the approximate center of the path of fiber stream 24. Thus while nozzles 31 spray binder into the outer portions 37 of fiber stream 24, nozzle 36 ensures that the fibers in the center of fiber stream 24 are coated with binder. Nozzle 36 sprays binder in a conical path as shown in order that the fibers be completely coated. It should be expressly understood that while one nozzle 36 is disclosed, it is within the full intended scope of the invention that more than one nozzle 36 may be located in fiber stream 24.

Thus, the combination of nozzles 31 and 36 serve to uniformly coat the fibers in moving stream of fibers 37. As such, all of the fibers are coated with the tacky inorganic binder. This is especially important where the binder is extremely tacky and thus is difficult to spray into a moving stream of material to any depth. Because the fiber and binder are being used in a high temperature environment it is essential that the fibers be coated uniformly in order that the layer formed by the coated fibers be of sufficient integrity to produce a monolithic layer on a furnace wall. Because of the heat to which the layer is subjected incomplete coating of the fibers would result in premature failure of the lining.

In practice, the method is best carried out by adding water to the tacky high temperature inorganic binder concentrate in a large drum located at the site of the surface to be sprayed. Bulk, high temperature resistant fibers such as aluminia-silica-zirconia fibers are placed in a hopper and may be shredded if needed to allow blowing thereof through spray gun 14.

The liquid binder concentrate is mixed with water in the drum preferably in approximately the ratio of, by volume, 4.5 parts water to 1 part binder concentrate. It should be expressly understood that the dilution ratio depends upon binder concentration and specific applications. Spraying the diluted binder directly onto the surface to be coated improves the bond of the fiber binder layer to the surface. The diluted binder is constantly stirred in the drum as it is fed to the spray gun in order to ensure a homogenous mixture of diluted binder. Referring to Fig. 6, the diluted binder solution is fed through binder feed line 28 into the external nozzle manifold 26 which feeds nozzles 31. Binder is supplied to nozzle 36 through line 35. Nozzles 31 and 36 spray binder into fiber stream 24. A ratio of about 0.794 kilogram (1.75 lbs.) fiber to about 0.454 kilogram (1 lb.) liquid binder is preferred. As with binder dilution, this ratio may be varied according to specific binder dilutions and application.

The method of the present invention ensures uniform coating of the fibers while in transit to the surface to be sprayed such that the fibers will adhere to each other as well as to the surface and form layers of wetted fibers which may be built up to the desired thickness. In practice, thicknesses of up to 355,6 mm (14 inches) of wetted fiber have been achieved. Spray gun 14 may be located between about 0.6 m - 1.2 m (two to four feet) or more from the surface as desired. The sprayed binder solution may converge along the axis of the sprayed fibers, either before reaching the surface or, in some cases, the point of convergence may not occur at all before reaching the surface but may be at an imaginary point beyond the surface to be sprayed. The bulk fiber may be blown by a suitable blowing apparatus (not shown), preferably at a rate of up to about 5,663 m³ (200 cubic feet) of air per minute through the fiber feed line 23.

While water is the preferred diluent because of its availability and cost, other suitable inert diluents such as alcohol or ethers may be used.

Once the coated fibers have been applied to the surface as in Fig. 1, the layer of binder coated fibers may be tamped as by the second operator 21 in Fig. 1. Operator 21 is shown utilizing a compressing trowel 22 in order to pack the coated fibers to the desired density. Once the fibers have been applied to the surface to the desired density, the binder is cured, by raising the temperature of the furnace to at least 176.67°C (350°F) and preferably to about 232.22°C (450°F) or more. While this is the preferred step for curing the fibers, any curing method which drives off the water or other diluent and all moisture from the coated fiber layer may be utilized with the method of the present invention.

As shown in Fig. 1, the method of the present invention may be used to apply binder coated fiber to a variety of surfaces. While the stream of binder coated fiber may be applied directly to the surfaces without support, it may be desirable in some instances to provide additional support for the fiber layer. That is, for example, expanded metal lathe could be attached to ceiling 17 of furnance 11 in order to provide additional support for the binder coated fiber layer.

Any other supporting structure as is known in the art may also be utilized. Additionally, it should be noted that the binder coated fiber is preferably applied to a surface which has been properly prepared. That is, in the case of refractory brick or other monolithic dense refractory such as shown on wall 18, such brick should be sand-blasted or otherwise prepared to remove loose or flaky material from the surface to be coated. If the binder coated fiber is to be applied to a metal surface as in 17 or wall 16 in Fig. 1, ah asphaltum or other protective coating may be desired in some cases. Where the method is to be used to apply binder coated fiber to a wall of existing refractory fiber as in wall 19 of Fig. 1, it is desirable to again remove all loose or flaking surfaces from the surface to be coated. The binder coated fibers may also be applied over an existing layer of previously sprayed binder coated fibers or fibrous formed shapes. That is, should a portion of the previous layer be knocked off due to mechanical or other contact with the surface, a new layer of binder coated fibers may be applied over the damaged area. In many situations it is desirable to spray a coating of binder onto the fiber-binder layer after the layer has been applied to the surface.

It can readily be seen that this method of applying refractory fiber linings overcomes many of the shortcomings previously described. This method, for instance, does not require the application of a mortar to old brick work or refractory linings in order to apply fibers in modular form as in prior art methods. The binder supplies the adhering mechanism as the new layer is being applied which results in reduced labor costs. Nor does the present method require any particular waiting period for the mortar to form hydraulic bonds and then dry out prior to firing. It can also be seen that the present method eliminates one of the basic shortcomings in prior attachment methods which required the exposed refractory fiber layer to be coated with a bonding material after the layers or modules were installed to impart abrasion resistance. The present method ensures that all fibers throughout the layer are well bonded to one another forming an inherently superior monolithic lining.

The surface of the lining applied with the present method is far less affected by mechanical or gas velocity abrasion. To support this statement the following experiment was conducted: a layer approximately 50.8 mm (2 inches) thick of 1426.67°C (2600°F) refractory fiber (Manville CERACHROME) was sprayed according to the present method onto an 46 cm x 23 cm (18" x 9") free standing refractory brick wall. This wall was placed directly in front of an air natural gas burner port of a furnace so that the surface of the sprayed lining was at an angle of 90° to the flame at a distance of 0.6 m (24") from the burner. Upon repeated firing to temperatures of 1204.44°C, 1315.55, and 1426.67°C (2200°F, 2400°F, and 2600°F), there was no damage to the sprayed layer from this extreme condition of temperature and gas stream velocity.

A novel method has been disclosed for applying refractory or other fiber which has been coated with a binder to a surface. Because the method ensures bonding together of the high temperature resistant fibers and their adherence to a surface, thick layers of heat insulating fibers may be applied very quickly. Because the application of the insulation is done in a very small fraction of the time normally required by present methods, the cost of the installation as well as the down time of the furnace or other device to be insulated are substantially reduced. Finally, the method disclosed herein allows immediate heating of the fiber layer thereby allowing the furnace or other device to be put into service almost immediately after spraying.

In fact, with the use of remote controlled devices such as robots or an air on water cooled lance, the binder fiber layer could be applied to a furnace which is at operating temperature. This would be useful to repair furnaces while still in operation.

A binder system used for the invention preferably comprises chromium aluminium phosphate and a suitable tackifying agent. The chromium aluminium phosphate compound preferred in the present invention may be characterized by the following generalized formula: $Al_2O_3.3P_2O_5.xCr_2O_3$ wherein x ranges from about 0.1 to 10.

The term "tackifying agent", as used is meant to define those substances which impart tackiness or adhesive properties to the binder system. Generally, such tackifying agents will be inorganic in nature. High temperature resistant clays, especially montmorillonite clays (preferably the western bentonite variety) have been found to be useful in the present invention. Sodium and calcium based clays such as southern betonite may also be used as tackifying agent. Whatever tackifying agent is used should, of course, be compatible with the overall binder system and its intended use with regard to both chemical and physical properties. It is especially important that the tackifier, in the quantity used, not produce fluxing of the binder-fiber system at elevated temperatures.

An alternate binder formulation includes colloidal silica combined with a tackifying agent. Preferably NALCO 1115 Colloidal Silica of the 4 millimicron size Sol containing 15% solids is used. Approximately 18.14 kilogram (40 lbs) of this colloidal silica was mixed with 0.57 kilogram (1.25 pounds) of western bentonite to form a tacky binder.

The addition of a montmorillonite clay such as western bentonite to the binder matrix has been found to produce a tacky binder which adheres to virtually any surface. While Western Bentonite is preferred, any of the clays selected from the Montmorillonite types of clay minerals have been found to be suitable tackifying agents.

The binder may be advantageously employed with refractory fibers in a spray-on process. That is, refractory fibers may be directed from a spray gun while at the same time being coated with the binder of the present invention. Such application of refractory fiber and binder has been found to raise the operating temperature of the refractory fibers above their normal rated temperature. For application of refractory fiber to a surface such as a furnace wall, the binder is diluted, preferably with water, in a 4.5 to 1 water to binder ratio by volume. This ratio may range from 2 to 1 to 15 to 1 by volume. The diluted binder is preferably stirred in the dilution container to ensure a homogenous mixture during the spraying process. The diluted binder may be sprayed with the fiber onto a surface in a ratio which depends upon binder dilution. For the preferred chromium aluminum phosphate binder disclosed above, a ratio of 0.794 kilogram (1.75 lbs.) of fiber to 0.454 kilogram (1.0 lb.) binder is preferred.

While the invention has been disclosed with respect to preferred embodiment thereof, it is not to be so limited as changes and modifications may be made which are within the full intended scope of the invention as defined by the claims. For example, as shown in Fig. 2 and 5, various geometric configurations of the spray gun may be employed so as to direct the path of the fibers to a specific application. In addition, various diluents may be used as the carrier for the binder concentrate. While chromium aluminum phosphate with bentonite clay has been disclosed as the preferred binder, other binders employing a temperature resistant clay such as montmorillonite, or plastic ball clays containing montmorillonite clay in quantities sufficient to ensure a tacky inorganic binder, may be employed. Finally while the inventive method is disclosed with reference to spraying refractory fibers, any fiber such as fiberglass, mineral wool, or other suitable fibers may be utilized with the disclosed methods. Combinations of these or different refractory fibers could also be employed to produce a stratified furnace lining which is extremely cost effective. In addition, the spraying of a binder with particulate matter such as various metallic oxides could be employed to provide a particularly heat resistant surface over the sprayed fiber-binder layer.

## Claims

1. Method for applying a layer of fibers to a surface comprising the steps of: directing a stream of the fibers toward the surface; coating the directed fibers with a tacky inorganic binder during the step of directing such that the fibers adhere to one another and to the surface, and curing the coated fibers, characterised in that the step of coating the directed fibers with a binder comprises spraying the binder onto the outside of the fiber stream and into the inner of said stream.

2. Method according to Claim 1, characterised in that the tacky inorganic binder includes both an inorganic binder matrix and temperature-resistant clays.

3. Method according to Claim 1 or 2, characterised in that the binder includes one or more of aluminium phosphate, colloidal silica, colloidal alumina and/or colloidal zirconia.

4. Method according to one of the Claims 1 to 3 wherein the fibers include refractory fibers.

5. Method according to one of the Claims 1 to 4, further including the step of spraying the binder onto the surface prior to the step of directing.

6. Method according to one of the prior claims, further including the step of, prior to curing the coated fibers: directing a stream of particulate material such as a metal oxide toward the coated fibers; and coating the particulate material with the binder during the step of directing such that the coated particulate material adheres to one another and to the coated fibers.

7. Method according to one of the claims 3 to 6, characterised in that the aluminum phosphate compound in the binder is chromium aluminum phosphate.

8. Spray gun for applying a layer of fibers onto a surface comprising a feed line for confining the stream of moving fibers in a predetermined configuration, at least one outside spray nozzle located on said spray gun for directing a stream of binder onto the outside of said stream of moving fibers, and at least one inside spray nozzle located within said moving fiber stream.

## Patentansprüche

1. Verfahren zum Aufbringen einer Schicht von Fasern auf eine Oberfläche mit den Schritten:
- Ein Strom von Fasern wird gegen die Oberfläche gerichtet;
- Die gerichteten Fasern werden während des Schrittes des Richtens mit einem klebrigen anorganischen Bindemittel beschichtet, so daß die Fasern aneinander und an der Oberfläche haften;
- Die beschichteten Fasern werden getrocknet; dadurch gekennzeichnet, daß der Schritt des Beschichtens der gerichteten Fasern mit einem Bindemittel das Sprühen des Bindemittels auf die Außenseite des Faserstromes und in das Innere des Stromes umfaßt.

2. Verfahren gemäß Anspruch 1, dadurch gekennzeichnet, daß das klebrige anorganische Bindemittel sowohl eine anorganische Bindemittel-Matrix als auch temperaturbeständige Tone enthält.

3. Verfahren gemäß Anspruch 1 oder Anspruch 2, dadurch gekennzeichnet, daß das Bindemittel mindestens einen der Stoffe Aluminiumphosphat, kolloidales Siliziumoxyd, kolloidales Aluminiumoxyd und/oder kolloidales Zirkoniumoxyd enthält.

4. Verfahren gemäß einem der Ansprüche 1 bis 3, dadurch gekennzeichnet, daß die Fasern feuerfeste Fasern enthalten.

5. Verfahren gemäß einem der Ansprüche 1 bis 4, dadurch gekennzeichnet, daß es vor dem Schritt des Richtens einen Schritt enthält, in welchem das Bindemittel auf die Oberfläche gesprüht wird.

6. Verfahren gemäß einem der vorausgehenden Ansprüche, dadurch gekennzeichnet, daß es vor dem Trocknen der beschichteten Fasern folgenden Schritt enthält: ein Strom von partikelförmigem Material, wie einem Metalloxyd, wird auf die beschichteten Fasern gerichtet und das partikelförmige Material wird während des Schrittes des Richtens mit dem Bindemittel beschichtet, so daß das beschichtete partikelförmige Material aneinander und an den beschichteten Fasern haftet.

7. Verfahren gemäß einem der Ansprüche 3 bis 6, dadurch gekennzeichnet, daß die Aluminium-Phosphat-Verbindung in dem Bindemittel Chrom-Aluminium-Phosphat ist.

8. Sprühgerät für das Aufbringen einer Schicht von Fasern auf eine Oberfläche mit einer Zuführung zum Einschließen des Stromes der bewegten Fasern in eine vorbestimmte Anordnung, mit zumindest einer äußeren Sprühdüse, die auf dem Sprühgerät für das Richten eines Stromes von Bindemitteln auf die Außenseite des Stromes der bewegten Fasern angeordnet ist, und mit mindestens einer inneren Sprühdüse, die innerhalb des bewegten Faserstromes angeordnet ist.

**Revendications**

1. Procédé d'application d'une couche de fibres à une surface, comprenant les étapes consistant:

à diriger un courant des fibres vers la surface; à revêtir les fibres orientées avec un liant inorganique collant au cours de l'étape directionnelle de sorte que les fibres adhèrent les unes aux autres et à la surface, et à provoquer la réticulation des fibres revêtues, caractérisé en ce que l'étape de revêtement au moyen d'un liant des fibres dirigées consiste à pulvériser le liant sur l'extérieur du courant de fibres et à l'intérieur dudit courant.

2. Procédé suivant la revendication 1, caractérisé en ce que le liant inorganique collant comprend une matrice inorganique et des argiles résistant à la chaleur.

3. Procédé suivant la revendication 1 ou 2, caractérisé en ce que le liant comprend un ou plusieurs composés choisis entre le phosphate d'aluminium, la silice colloïdale, l'alumine colloïdale et/ou la zircone colloïdale.

4. Procédé suivant l'une des revendications 1 à 3, dans lequel les fibres comprennent des fibres réfractaires.

5. Procédé suivant l'une des revendications 1 à 4, comprenant en outre l'étape consistant à pulvériser le liant sur la surface avant l'étape directionnelle.

6. Procédé suivant l'une des revendications précédentes, comprenant en outre l'étape consistant, avant de provoquer la réticulation des fibres revêtues, à diriger un courant de matière en particules, telle qu'un oxyde métallique, vers les fibres revêtues, et à revêtir la matière en particules avec le liant au cours de l'étape directionnelle de sorte que les particules de matière revêtues adhèrent les unes aux autres et aux fibres revêtues.

7. Procédé suivant l'une des revendications 3 à 6, caractérisé en ce que le phosphate d'aluminium présent dans le liant est le phosphate de chrome-aluminium.

8. Pistolet-pulvérisateur destiné à l'application d'une couche de fibres sur une surface, comprenant un conduit d'alimentation destiné à confiner le courant de fibres mobiles dans une configuration prédéterminée, au moins une buse extérieure de pulvérisation située sur ledit pistolet-pulvérisateur, destinée à diriger un courant de liant sur l'extérieur dudit courant de fibres mobiles, et au moins une buse intérieure de pulvérisation située à l'intérieur dudit courant de fibres mobiles.

*fig. 1*

FIBER

BINDER

3

28

29

*Fig. 2.*

26

25

31

32

32

23

14

14

3

34

*Fig 4.*

28

31

*Fig. 3*

29

28

33

31

27

32

25

30

24

24

37

31

fig. 5.

fig. 6.

3